# EUROPÄISCHE PATENTSCHRIFT

(11) **EP 0 737 306 B1**
(45) Veröffentlichungstag und Bekanntmachung des Hinweises auf die Patenterteilung: **08.04.1998**
(21) Anmeldenummer: 95902770.7
(22) Anmeldetag: 16.12.1994
(51) Int. Cl.: G01M 13/00, G01M 3/18, G01P 3/44

(54) **VERFAHREN ZUM ÜBERWACHEN DES FUNKTIONSGERECHTEN ARBEITENS EINER DICHTUNG UND VORRICHTUNG HIERZU**
METHOD OF MONITORING A SEAL FOR CORRECT OPERATION, AND MONITORING DEVICE FOR CARRYING OUT THE METHOD
PROCEDE POUR LE CONTROLE DU FONCTIONNEMENT APPROPRIE D'UN JOINT ET DISPOSITIF POUR CE PROCEDE

(30) Priorität: 30.12.1993 DE 9320143 U
(43) Veröffentlichungstag der Anmeldung: 16.10.1996
(73) Patentinhaber: Nord, Klaus Jürgen, 68199 Mannheim (DE)
(72) Erfinder: Nord, Klaus Jürgen, 68199 Mannheim (DE)
(74) Vertreter: Mierswa, Klaus, Dipl.-Ing.
(86) Internationale Anmeldenummer: DE9401503
(87) Internationale Veröffentlichungsnummer: WO9518363

(56) Entgegenhaltungen:
- EP-A- 0 454 374
- WO-A-95/06237
- DE-A- 2 941 564
- DE-A- 4 212 973
- DE-A- 4 225 815
- US-A- 5 121 929

## Beschreibung

### Technisches Gebiet:

Die Erfindung betrifft Verfahren zum Überwachen des funktionsgerechten Arbeitens einer wellenumfassenden Dichtung und einer Flachdichtung, einschließlich der Dichtigkeit derselben auf einer Welle oder Achse, gemäß den Oberbegriffen der Ansprüche 1 oder 2 sowie Vorrichtungen zur Durchführung der Verfahren; Ansprüche 5, 6.

### Stand der Technik:

Dichtungen sind für unterschiedliche Aufgaben an technischen Geräten zur Sicherung entsprechender Aufgaben konzipiert und hierdurch vielseitig zu verwenden, wodurch diese prinzipiell ein sicherheitsrelevantes Bauteil darstellen. Ein erhebliches Sicherheitsrisiko liegt immer dann vor, wenn es sich um die Abdichtung sicherheitsrelevanter Teile allgemein und im speziellen, z.B. an Rotationswellen technischer Geräte, im Hochsicherheitsbereich von Fluggeräten oder Kernkraftwerken, handelt und eine Dichtung dort beschädigt wird oder aus Altersgründen ermüdet. Derzeit werden zum Erkennen von Schäden im Bereich einer Dichtung separate Meßvorrichtungen angebracht, die erst im Schadensfall ein elektrisches Signal erzeugen.

Des weiteren werden derzeit Dichtungen als Bauteil selbständiger Schalt-, bzw. Meßgeräte nicht verwendet, so daß Meßsignale zum Steuern bzw. Regeln von technischen Einrichtungen im Bereich von Dichtungen sowie zum Überwachen der Dichtung selbst nur über zusätzliche Einrichtungen durchgeführt werden können.

Durch die EP-A1-0 568 184 ist eine Einrichtung zur Überwachung einer Gleitringdichtung bekannt geworden, bei der auf einem gegenüber der rotierenden Welle abgedichteten Basisteil ein federbelasteter, verschieblicher Keil angeordnet ist, der bei Undichtigkeit der Abdichtung sich verschiebt und dessen Bewegung mittels einer Videokamera überwacht werden kann. Durch die EP-A2-0454374 ist eine Vorrichtung ebenfalls zur Überwachung von Ringdichtungen an Wellen bekannt geworden, bei der bei einer Undichtigkeit ein Gleitring verschoben wird, dessen Verschiebung elektrisch ausgewertet wird, wobei die Verlagerung der Welle optisch erfaßt werden kann. In beiden Fällen wird somit eine unzulässige Bewegung der Dichtung bzw. der Welle in eine Bewegung eines angrenzenden Körpers transformiert, dessen Bewegung seinerseits optisch abgetastet oder elektrisch vermessen wird.

Durch die DE 43 05 338 A1 ist eine Dichtung bekannt geworden, die aus einem Grundkörper aus elastomerem Werkstoff besteht und gegebenenfalls einen metallischen Verstärkungskörper aufweist und mit einem mit der Dichtung verbundenen Sensor. Der Grundkörper weist mindestens einen Bereich mit gegenüber dem übrigen Bereich unterschiedlichen physikalischen Eigenschaften auf, so daß der Grundkörper als Signalgeber fungiert. Ein Sensor ist an der Umgebung getrennt von der Dichtung fest angebracht, der die durch die segmentartigen Bereiche mit den unterschiedlichen physikalischen Eigenschaften hervorgerufenen Änderungen registriert.

Durch die US-A-5121929 ist eine aus zwei Teilen bestehende, lastempfind-liche Flachdichtung mit einem eine Serviceöffnung für Flüssigkeiten bildenden, zentralen Durchgangsloch bekannt geworden, wobei zwischen beiden Teilen ein Lastsensor angeordnet ist. Der Lastsensor besteht aus sich gegenüberstehenden Elektroden, zwischen denen ein druckempfindliches elektrisches Widerstandsmaterial angeordnet ist; von den Elektroden führen elektrische Zuleitungen nach außerhalb der Flachdichtung, um durch das elektrisches Widerstandsmaterial einen elektrischen Strom zu schicken, der sich bei einer Laständerung ebenfalls ändert. Bei der Flachdichtung handelt es sich somit um einen passiven Lastsensor.

### Technische Aufgabe:

Der Erfindung liegt die Aufgabe zugrunde, eine wellenumfassende Dichtung auf einer Welle oder Achse oder eine Flachdichtung bezüglich ihres funktionsgerechten Arbeitens bzw. ihrer Dichtigkeit dergestalt direkt zu überwachen, daß bei einem anormalen Verhalten der Dichtung bzw. beim Auftreten einer Leckage die Dichtung ein Überwachungssignal abgibt.

### Offenbarung der Erfindung und deren Vorteile:

Diese Aufgabe wird bei einer wellenumfassende Dichtung erfindungsgemäß dadurch gelöst, daß unmittelbar an der Dichtung oder in der Dichtung wenigstens ein Sensor angeordnet ist, der mechanisch-dynamische Spannungen oder Verformungen oder Bewegungen in bzw. an der Dichtung direkt erfaßt und in entsprechende elektrische Signale transformiert, die zu ihrer Auswertung am Sensor abgenommen und weiterverarbeitet werden, wobei aus dem ausgewerteten Signal des Sensors auf das funktionsgerechte Arbeiten der Dichtung einschließlich der Dichtigkeit derselben geschlossen werden kann.

Das Verfahren zum Überwachen des funktionsgerechten Arbeitens einer Flachdichtung unter Verwendung wenigstens eines Sensors ist dadurch gekennzeichnet, daß der Sensors unmittelbar an der Flachdichtung oder in der Flachdichtung angeordnet ist, der mechanisch-dynamische Spannungen oder Verformungen oder Bewegungen in bzw. an der Flachdichtung direkt erfaßt und in entsprechende elektrische Signale transformiert, die zu ihrer Auswertung am Sensor abgenommen und weiterverarbeitet werden, wobei aus dem ausgewerteten Signal des Sensors auf das funktionsgerechte Arbeiten der Flachdichtung einschließlich der Dichtigkeit derselben geschlossen werden kann.

Das erfindungsgemäße Verfahren weist den Vorteil auf, daß sämtliche sicherheitsrelevanten Daten über eine Dichtung sowie derjenigen, die aus dem näheren bzw. unmittelbar benachbarten Bereich der Dichtung oder unmittelbar aus der Dichtung selbst stammen, z.B. von einer rotierenden Welle im Bereich der Dichtung, innerhalb des Sensors der Dichtung oder des sich in unmittelbarer Nachbarschaft der Dichtung befindenden Sensors als elektrisches Signal direkt erzeugt werden. Dadurch kann in vorteilhafter Weise das funktionsgerechte Arbeiten einer Dichtung, insbesondere die Dichtigkeit einer Dichtung auf einer Achse oder Welle, laufend gemessen und überwacht werden, so daß schon bei den geringsten, meßbaren Anzeichen einer Anomalität oder Leckage der Dichtung entsprechend reagiert und beispielsweise die Dichtung ausgetauscht werden kann, bevor größere Schäden an einer wertvollen Maschine oder Einrichtung entstehen. Ebenso kann die Dichtung als selbständiges Meß- und Steuergerät arbeiten, in dem eine Bewegung, vorzugsweise eine kontinuierliche Drehbewegung, mindestens eines Impulsgebers bzw. Impulsauslösers vorhersehbar erfaßt wird, so daß die Dichtung zum Steuern und Regeln von Signalauswerteeinrichtungen technischer Geräte und zur Kontrolle der Dichtung selbst entsprechend genutzt werden kann.

Eine Vorrichtung zum Überwachen des funktionsgerechten Arbeitens einer wellenumfassenden Dichtung ist dadurch gekennzeichnet, daß unmittelbar an der Dichtung oder in der Dichtung wenigstens ein Sensor angeordnet ist, der mechanisch-dynamische Spannungen oder Verformungen oder Bewegungen in bzw. an der Dichtung direkt zu erfassen und in entsprechende elektrische Signale zu transformieren imstande ist, die zu ihrer Auswertung am Sensor abnehmbar und weiterverarbeitbar sind, wobei aus dem ausgewerteten Signal des Sensors auf das funktionsgerechte Arbeiten der Dichtung einschließlich deren Dichtigkeit geschlossen werden kann.

Eine weitere Vorrichtung zum Überwachen des funktionsgerechten Arbeitens einer Flachdichtung mit wenigstens einem Sensor ist dadurch gekennzeichnet, daß der Sensor unmittelbar an der Flachdichtung oder in der Flachdichtung angeordnet ist, der mechanisch-dynamische Spannungen oder Verformungen oder Bewegungen in bzw. an der Flachdichtung direkt zu erfassen und in entsprechende elektrische Signale zu transformieren imstande ist, die zu ihrer Auswertung am Sensor abnehmbar und weiterverarbeitbar sind, wobei aus dem ausgewerteten Signal des Sensors auf das funktionsgerechte Arbeiten der Flachdichtung einschließlich deren Dichtigkeit geschlossen werden kann.

Die mittels der Sensoren erzeugten Signale können direkt durch bekannte optische, bzw. akustische, bzw. rechnergeseteuerte Meß- und Signalauswerteeinrichtungen in bekannter Weise umgesetzt werden; im einfachsten Fall leuchtet als optische Signalauswertung eine Kontrollampe auf. Prinzipiell unabhängig von der Art der Dichtung ist die Anwendung dieses Verfahrens in einer Dichtung, wobei der oder die entsprechend arbeitenden Sensoren die jeweilige Meßgröße direkt innerhalb der Dichtung oder des Dichtungsmaterials der Dichtung oder an der Dichtung erfassen. Auf diese Weise können der Druck oder die Elastizität oder Ermüdungserscheinungen innerhalb einer Dichtung oder Leckagen zwischen einer Dichtung und einer Welle fortlaufend gemessen und überprüft werden. Ein wesentlicher Vorteil der Erfindung besteht darin, daß sich mit einer erfindungsgemäßen Dichtung der Sicherheitsstandard technischer Geräte als vielseitig anzuwendendes Meßgerät wesentlich verbessern und kosten-günstiger herstellen läßt.

Für die Messung der an der Dichtung oder in der Dichtung bzw. innerhalb des Dichtungsmaterials der Dichtung vorkommenden Verformungen, Spannungen und Bewegungen werden bevorzugt elektromechanisch arbeitende Sensoren, z.B. Piezoelemente oder Hallgeneratoren, eingesetzt, die an der Dichtung oder in der Dichtung angeordnet sind, so daß gewährleistet ist, daß die Sensoren mechanische Spannungen oder Verformungen oder Bewegungen an der Dichtung oder in der Dichtung aufzunehmen imstande sind und in elektrische Signale umwandeln können, so daß beispielsweise an der Dichtung oder in der Dichtung auftretende Kräfte reduziert werden können und vor der Auswirkung eines Schadens diesem in geeigneter Weise entgegengewirkt werden kann, beispielsweise durch das Ersetzen einer schadhaft werdenden Dichtung.

Für die Messung von Bewegungsabläufen an einer Dichtung werden bevorzugt Sensoren vorgeschlagen, die durch einen bewegten Impulsgeber ein elektrisches Signal erzeugen, zum Beispiel Magnetsensoren. Als Impulsgeber kann hier ein Lager genutzt werden, zum Beispiel ein Kugellager, dessen bewegliche Teile, nämlich die Kugeln des Lagers oder auch ein strukturierter Kugelkäfig, sich im Bereich der Dichtung bewegen und so in dem Sensor der Dichtung ein Signal, insbesondere elektrisches Signal, erzeugen, das hier entsprechend abgenommen und ausgewertet werden kann. Somit können Beschleunigungen und Verzögerungen der Lagerteile, bzw. Beschleunigungen und Verzögerungen der bewegten Welle, an der die Lager angeordnet sind, gemessen werden; beispielsweise können aus der Frequenz der hier erzeugten elektrischen Signale technische Systeme, die mittels derartiger Signale arbeiten bzw. derartige Signale verarbeiten, zum Beispiel Antiblockier-Systeme, geregelt oder gesteuert werden.

Erfindungsgemäß können sämtliche Sensorentypen angewendet werden, die an der Dichtung oder in der Dichtung angeordnet werden können, um auftretende Spannungen bzw. Verformungen bzw. Bewegungsabläufe an der Dichtung oder in der Dichtung zu erfassen und diese Spannungen oder Verformungen oder Bewegungsabläufe in ein elektrisches Meß- bzw. Steuer- oder Regelsignal zu transformieren. Beispielsweise können derartige Wandler elektromechanische Wandler - zum Beispiel Piezosysteme bzw. Magnetsysteme, oder mechanisch arbeitende Sensoren, wie elektrische Kontaktleiter - sein, die gemäß ihrer Arbeitsweise entsprechend an der Dichtung oder in der Dichtung angeordnet sind. Diese Kontaktleiter können von zwei elektrischen Anschlußstellen, aber auch von einem einfachen elektrischen Leiter gebildet sein, der zum Beispiel bei seiner Zerstörung ein Signal hervorzurufen imstande ist. Auch die Kombination solcher Sensoren ist möglich, so daß mit der Dichtung unterschiedliche Schalt-, Meß- und Prüfsignale erzeugt und an den Sensoren abgenommen werden können.

Die Übertragung von elektrischen Signalen durch eine Signalübertragungsvorrichtung an eine Signalauswerteeinrichtung und deren Auswertung ist bekannt, weshalb auf die Beschreibung des Signalauswertevorganges verzichtet werden kann. Gleichermaßen trifft das auf die Wirkungs- und Arbeitsweise elektromechanischer bzw. magnetischer und elektrischer Kontaktschalter als Sensoren im Sinne der Erfindung zu.

Da heute schon sehr kleine Piezoelemente erhältlich sind, können vorteilhaft auch kleine Dichtungen, beispielsweise von wenigen Millimetern Durchmesser, erfindungsgemäß ausgerüstet oder entsprechende Geräte nachgerüstet werden. Ein weiterer Vorteil der Erfindung besteht darin, daß eine Vielzahl von Geräten prinzipiell mit den erfindungsgemäßen Dichtungen nachgerüstet werden können, ohne daß größere Umbauten durchgeführt werden müssen.

### Kurzbeschreibung der Zeichnung, in der zeigen:

- Figur 1: einen Schnitt durch eine auf einer Welle sitzende Dichtung, in der elektromechanische Sensoren inkorporiert sind
- Figur 2: einen Schnitt durch eine weitere Dichtung, die beispielsweise eine Flachdichtung sein kann, in der ebenfalls elektromechanische Sensoren inkorporiert sind,
- Figur 3: einen Schnitt durch eine auf einer Welle sitzende Dichtung, in deren Material elektromechanische Sensoren angeordnet sind, die beispielsweise als Kontaktschalter ausgebildet sind und
- Figur 4: einen Schnitt durch eine weitere auf einer Welle sitzende Dichtung mit in das Dichtungsmaterial randseitig inkorporierten Sensoren, die beispielsweise Permanentmagnete sind und der Dichtung ein kontinuierlich sich drehender Impulsgeber, beispielsweise Kugellager, gegenübersteht, wobei die Welle und das Kugellager der Übersicht halber nicht geschnitten gezeichnet sind.

### Bevorzugte Ausführungsform der Erfindung:

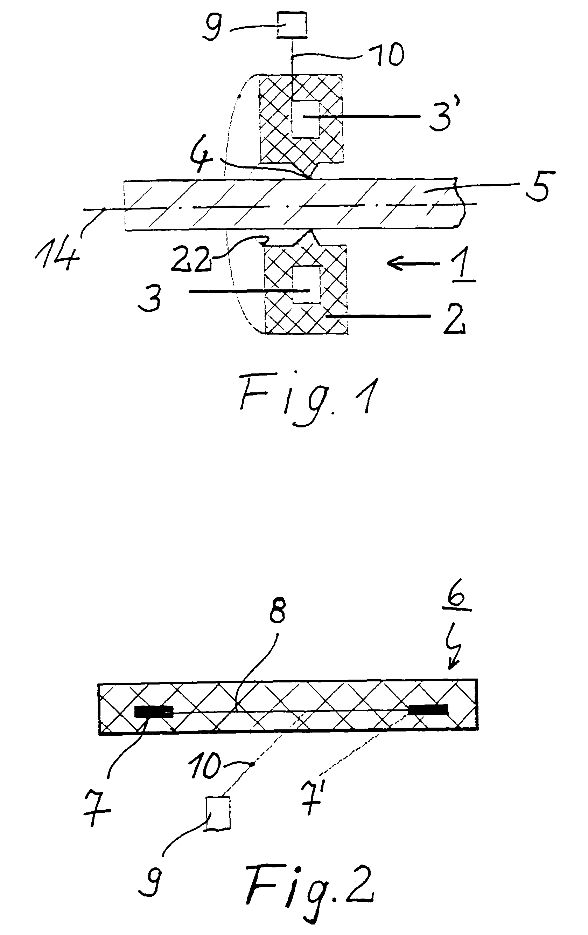

Figur 1 zeigt schematisch eine torusförmige Dichtung 1 im Schnitt einer Durchmesserebene, die senkrecht auf der Längsachse 14 einer Welle 5 steht, die von der Dichtung 1 umfaßt wird. Die Dichtung 1 besitzt auf dem Umfang des Mantels des Zentrumsloches 22 eine umlaufende Dichtlippe 4, die auf dem Umfang der Welle 5 aufliegt und das Zentrumsloch 22 der Dichtung 1 gegenüber der Welle 5 abdichtet. In das Material 2 der Dichtung 1 sind Sensoren 3, 3' inkorporiert, die vorzugsweise auf einem Kreis innerhalb der Dichtung 1 um das Zentrumsloch 22 derselben bzw. der Welle 5 angeordnet sind und vom Dichtungsmaterial vollständig umgeben sein können. Vorzugsweise sind die Sensoren 3, 3' in der Nähe der Dichtlippe 4 angeordnet, so daß über das Material der Dichtung 1 auf die Sensoren 3, 3' ohne nennenswerte innere Reibungsverluste sämtliche Bewegungen oder Verformungen des Dichtungsmaterials 2, insbesondere der Dichtlippe 4 wie auch der übrigen Dichtung 1, übertragen werden. Wenn es sich bei den Sensoren beispielsweise um Piezoelemente 3, 3' handelt, sind diese durch die mechanisch-dynamischen Spannungsänderungen innerhalb des Dichtungsmaterials 2 imstande, ein elektrisches Signal abzugeben, welches über eine Übertragungsstrecke 10, beispielsweise eine galvanische elektrische Verbindungsleitung, nach außerhalb zu einer Signalauswerteeinrichtung 9 geleitet und dort ausgewertet wird.

Figur 2 zeigt eine weitere Dichtung 6, die beispielsweise eine scheibenförmige oder torusförmige Flachdichtung sein kann, innerhalb der Sensoren 7, 7' inkorporiert sind, die mittels einer gemeinsamen Leitung 8 verbunden sind, an die eine nach außerhalb der Dichtung 6 führende Übertragungsstrecke 10 angekoppelt ist, über die die in den Sensoren 7, 7' erzeugten elektrischen Signale zu einer Signalauswerteeinrichtung 9 übertragen werden. Die Sensoren können wiederum Piezoelemente 7, 7' sein.

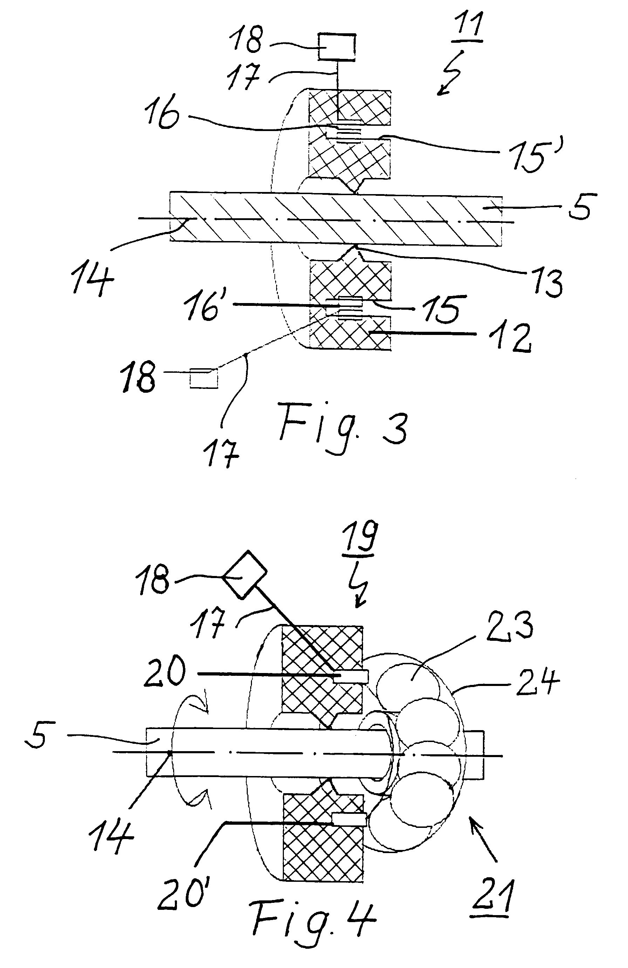

Figur 3 zeigt schematisch eine weitere torusförmige Dichtung 11 im Schnitt einer Durchmesserebene, die senkrecht auf der Längsachse 14 einer Welle 5 steht, die von der Dichtung 11 umfaßt wird. Innerhalb der Dichtung 11 sind Schlitze 15, 15' oder Löcher angeordnet, die sich in Richtung der Längsachse 14 der Welle 5 erstrecken und auf einem Kreis um das Zentrumsloch der Dichtung 11 liegen. In den Schlitzen oder Löchern 15, 15' sind elektromag-netische Sensoren angeordnet, die zum Beispiel Kontaktschalter 16, 16' sein können und die in einem innigen Kontakt mit dem umgebenden Material der Dichtung 11 stehen. Die Kontaktschalter 16, 16' können dabei jeweils aus zwei radial angeordneten, beabstandeten Teilen bestehen, die bei mechanisch-dynamischen Verformungen oder Bewegungen der Dichtung 11 unter gegenseitiger Kontaktierung sich relativ zueinander zu bewegen imstande sind und ein elektrisches Signal über Übertragungsstrecken 17 nach außen zu Signalauswerteeinrichtungen 18 abgeben.

Figur 4 zeigt in schematischer Darstellung eine weitere torusförmige Dich-tung 19 im Schnitt einer Durchmesserebene, die senkrecht auf der Längsachse 14 einer Welle 5 steht, die von der Dichtung 19 umfaßt wird. In das Dichtungsmaterial der Dichtung 19 sind vorzugsweise auf einem Kreis um das Zentrumsloch herum Sensoren angeordnet, die hier z.B. inkorporierte Permanentmagnete 20, 20' sind. Außerhalb der Dichtung 19 in deren unmittelbarer Nachbarschaft auf der Welle 5 steht der Dichtung 19 ein Impulsgeber 21 gegenüber, der beispielsweise ein Kugellager sein kann; die Signalübertragung und die Auswerteeinrichtung der elektrischen Signale ist nicht dargestellt. Ebenso kann die Dichtung in das Kugellager integriert sein. Bei Drehen des Impulsgebers 21 bzw. des Kugellagers 21 können aufgrund der Vorbeibewegung der Kugeln 23 des Kugellagers - oder auch des zur Impulserzeugung geeigneten gestalteten Käfigs 24 - mittels der Sensoren, insbesondere Permanentmagnete 20, 20', entsprechende elektrische Signale erzeugt und an den Permanentmagneten oder am Impulsgeber abgenommen werden.

Diese Dichtung 19 stellt somit eine als selbständiges Schalt-, bzw. Meßgerät ausgebildete Dichtung dar, an dem die elektrischen Signale zur weiteren Auswertung und Verarbeitung abgenommen werden können, wobei die auftretenden Spannungen bzw. Verformungen in der Dichtung bzw. an der Dichtung auftretenden Bewegungsabläufe des Impulsgebers 21 in beliebiger Kombination von Sensoren 20, 20' erfaßt und innerhalb der Sensoren 20, 20' entsprechend elektrische Signale transformiert werden, die an den Sensoren 20, 20' als Meßsignale unterschiedlicher Erregungsmechanismen gleichzeitig abgenommen und ausgewertet werden können.

Die Anordnung von Sensoren in der Dichtung kommt beispielsweise bei einer mehrteiligen oder mehrschaligen Dichtung zur Anwendung.

Gewerbliche Anwendbarkeit und Nützlichkeit der Erfindung:
Der Gegenstand der Erfindung ist insbesondere bei der Überwachung von Dichtungen aller Art gewerblich anwendbar. Die Nützlichkeit der Erfindung besteht insbesondere darin, daß eine derartige mit einem Sensor ausgerüstete Dichtung permanent auf Leckagen oder auf ihrer sonstige Funktionstüchtigkeit überprüft werden kann. Ebenso stellt eine vorteilhafte Variante des Gegenstades der Erfindung ein selbständiges Schalt- oder Meßgerät dar.

## Patentansprüche

1. Verfahren zum Überwachen des funktionsgerechten Arbeitens einer wellenumfassenden Dichtung (1,11,19) einschließlich der Dichtigkeit derselben auf einer Welle (5) oder Achse, dadurch gekennzeichnet,
daß unmittelbar an der Dichtung (1,11,19) oder in der Dichtung (1,11,19) wenigstens ein Sensor (3,3',11,16', 20,20') angeordnet ist, der mechanisch-dynamische Spannungen oder Verformungen oder Bewegungen in bzw. an der Dichtung (1,11,19) direkt erfaßt und in entsprechende elektrische Signale transformiert, die zu ihrer Auswertung am Sensor (3,3',16,16',20,20') abgenommen und weiterverarbeitet werden, wobei aus dem ausgewerteten Signal des Sensors (3,3',16,16',20,20') auf das funktionsgerechte Arbeiten der Dichtung (1,11,19) einschließlich der Dichtigkeit derselben geschlossen werden kann.

2. Verfahren zum Überwachen des funktionsgerechten Arbeitens einer Flachdichtung (6) unter Verwendung wenigstens eines Sensors (7,7'), dadurch gekennzeichnet,
daß der Sensors (7,7') unmittelbar an der Flachdichtung (6) oder in der Flachdichtung (6) angeordnet ist, der mechanisch-dynamische Spannungen oder Verformungen oder Bewegungen in bzw. an der Flachdichtung (6) direkt erfaßt und in entsprechende elektrische Signale transformiert, die zu ihrer Auswertung am Sensor (7,7') abgenommen und weiterverarbeitet werden, wobei aus dem ausgewerteten Signal des Sensors (7,7') auf das funktionsgerechte Arbeiten der Flachdichtung (6) einschließlich der Dichtigkeit derselben geschlossen werden kann.

3. Verfahren nach Anspruch 1 oder 2, dadurch gekennzeichnet,
daß den an der Dichtung (19) oder in der Dichtung (19) angeordneten Sensoren (20,20') ein bewegter, vorzugsweise rotierender, Impulsgeber (21) außerhalb der Dichtung (19) benachbart ist und die Sensoren (20,20') die Bewegungen, vorzugsweise Drehungen, des Impulsgebers (21) direkt an der Dichtung oder in der Dichtung erfassen und in elektrische Signale transformieren, wobei an den Sensoren (20,20') diese Signale zum Regeln oder Steuern technischer Systeme abgenommen werden und somit die Dichtung (19) als selbständiges Meß- und Steuergerät arbeitet.

4. Verfahren nach Anspruch 1 oder 2 oder 3, dadurch gekennzeichnet,
daß als bewegter Impulsgeber ein Lager (21), insbesondere Kugellager (21), verwendet wird und die bewegten Teile (23) des Lagers (21), insbesondere Kugeln (23) oder strukturierter Käfig, sich im Bereich der Dichtung (19) bewegen, wobei von dem Sensor (20,20') in bzw. an der Dichtung (19) entsprechende elektrische Signale erzeugt werden, die zu ihrer Auswertung am Sensor (20,20') oder am Impulsgeber (21) abgenommen und ausgewertet werden.

5. Vorrichtung zum Überwachen des funktionsgerechten Arbeitens einer wellenumfassenden Dichtung (1,11,19) einschließlich der Dichtigkeit derselben auf einer Welle (5) oder Achse, dadurch gekennzeichnet,
daß unmittelbar an der Dichtung (1,11,19) oder in der Dichtung (1,11,19) wenigstens ein Sensor (3,3',16,16',20,20') angeordnet ist, der mechanisch-dynamische Spannungen oder Verformungen oder Bewegungen in bzw. an der Dichtung (1,11,19) direkt zu erfassen und in entsprechende elektrische Signale zu transformieren imstande ist, die zu ihrer Auswertung am Sensor (3,3',16,16',20,20') abnehmbar und weiterverarbeitbar sind, wobei aus dem ausgewerteten Signal des Sensors (3,3',16,16',20,20') auf das funktionsgerechte Arbeiten der Dichtung (1,11,19) einschließlich deren Dichtigkeit geschlossen werden kann.

6. Vorrichtung zum Überwachen des funktionsgerechten Arbeitens einer Flachdichtung (6), mit wenigstens einem Sensor (7,7'),
dadurch gekennzeichnet,
daß der Sensor (7,7') unmittelbar an der Flachdichtung (6) oder in der Flachdichtung (6) angeordnet ist, der mechanisch-dynamische Spannungen oder Verformungen oder Bewegungen in bzw. an der Flachdichtung (6) direkt zu erfassen und in entsprechende elektrische Signale zu transformieren imstande ist, die zu ihrer Auswertung am Sensor (7,7') abnehmbar und weiterverarbeitbar sind, wobei aus dem ausgewerteten Signal des Sensors (7,7') auf das funktionsgerechte Arbeiten der Flachdichtung (6) einschließlich deren Dichtigkeit geschlossen werden kann.

7. Vorrichtung nach Anspruch 5 oder 6, dadurch gekennzeichnet,
daß den an der Dichtung (2,19) oder in der Dichtung (1,11,19) angeordneten Sensoren (20,20') ein bewegter, vorzugsweise rotierender, Impulsgeber (21) außerhalb der Dichtung (19) benachbart ist und die Sensoren (20,20') die Bewegungen, vorzugsweise Drehungen, des Impulsgebers (21) direkt zu erfassen und in elektrische Signale zu transformieren imstande sind, wobei an den Sensoren (20,20') diese Signale zum Regeln oder Steuern technischer Systeme abnehmbar sind und somit die Dichtung (19) als selbständiges Meßund Steuergerät zu arbeiten imstande ist.

8. Vorrichtung nach Anspruch 7, dadurch gekennzeichnet,
daß der Impulsgeber ein Lager (21), insbesondere Kugellager (21), und die Bewegung eine kontinuierliche Drehbewegung ist und die bewegten Teile (23) des Lagers (21), insbesondere Kugeln (23) oder Käfig, sich im Bereich der Dichtung bewegen, wobei der Sensor (20,20') in bzw. an der Dichtung (19) entsprechende elektrische Signale zu erzeugen imstande ist, die zu ihrer Auswertung am Sensor (20,20') oder am Impulsgeber (21) abnehmbar und auswertbar sind.

9. Vorrichtung nach Anspruch 8, dadurch gekennzeichnet,
daß der Impulsgeber ein Kugellager (21) ist, in welches die Dichtung (19) integriert ist.

10. Vorrichtung nach Anspruch 8, dadurch gekennzeichnet,
die Sensoren (3,3',7,7',16,16',20,20') in einer torusförmigen Dichtung (19) auf einem Kreis um das Zentrumsloch herum angeordnet sind und der Impulsgeber (21) auf der Welle (5) außerhalb der Dichtung (19) derselben in unmittelbarer Nachbarschaft gegenübersteht.

11. Vorrichtung nach Anspruch 5 oder 6 oder 7, dadurch gekennzeichnet,
daß die Sensoren (3,3',7,7',16,16',20,20') elektromechanische Wandler, wie Piezosysteme oder Magnetsysteme oder Hallgeneratoren oder mechanisch arbeitende Sensoren, wie elektrische Kontaktleiter, oder Permanentmagnete sind, die gemäß ihrer Arbeitsweise entsprechend in der Dichtung angeordnet sind.

12. Vorrichtung nach Anspruch 7 oder 8, zum Messen von Beschleunigungen und Verzögerungen von Lagerteilen oder Lagern oder Beschleunigungen und Verzögerungen einer bewegten Welle, an der das Lager angeordnet ist,
dadurch gekennzeichnet,
daß aus der Frequenz der erzeugten elektrischen Signale technische Systeme, die mittels derartiger Signale arbeiten, wie Antiblockier-Systeme, regel- oder steuerbar sind.

## Claims

1. Process to monitor the proper functioning of a gasket (1, 11, 19) that surrounds a shaft, including monitoring the tightness of said gasket on a shaft (5) or axle, characterized in that,
immediately on the gasket (1, 11, 19) or in the gasket (1, 11, 19), there is at least one sensor (3, 3', 16, 16', 20, 20') that directly detects mechanical-dynamic loads or deformations or movements in or on the gasket (1, 11, 19) and transforms them into corresponding electric signals that are picked up and further processed at the sensor (3, 3', 16, 16', 20, 20') for purposes of evaluation whereby, on the basis of the evaluated signal ofthe sensor (3, 3', 16, 16', 20, 20'), a conclusion can be drawn about the proper functioning of the gasket (1, 11, 19) as well as about the tightness of said gasket.

2. Process to monitor the proper functioning of a flat gasket (6) using at least one sensor (7, 7'), characterized in that
the sensor (7, 7') is arranged immediately on the flat gasket (6) or in the flat gasket (6), whereby said sensor directly detects mechanical-dynamic loads or deformations or movements in or on the flat gasket (6) and transforms them into corresponding electric signals that are picked up and further processed at the sensor (7, 7') for purposes of evaluation whereby, on the basis of the evaluated signal of the sensor (7, 7'), a conclusion can be drawn about the proper functioning of the flat gasket (6) as well as about the tightness of said gasket.

3. Process according to Claim 1 or 2, characterized in that
a moving, preferably rotating pulse generator (21) located outside of the gasket (19) is adjacent to the sensors (20, 20') arranged on the gasket (19) or in the gasket (19) and the sensors (20, 20') directly detect the movements, preferably rotations, of the pulse generator (21) on the gasket or in the gasket and transform them into electric signals, whereby these signals are picked up at the sensors (20, 20') in order to regulate or control technical systems so that the gasket (19) functions as an autonomous measurement and control device.

4. Process according to Claim 1 or 2 or 3, characterized in that
a bearing (21), especially a ball bearing (21), is used as the moving pulse generator and the moving parts (23) of the bearing (21), especially balls (23) or a structured cage, move in the area of the gasket (19) whereby, in or on the gasket (19), the sensor (20, 20') generates corresponding electrical signals that, for purposes of evaluation, are picked up and evaluated at the sensor (20, 20') or at the pulse generator (21).

5. Device to monitor the proper functioning of a gasket (1, 11, 19) that surrounds a shaft, including monitoring the tightness of said gasket on a shaft (5) or axle, characterized in that,
immediately on the gasket (1, 11, 19) or in the gasket (1, 11, 19), there is at least one sensor (3, 3', 16, 16', 20, 20') that is capable of directly detecting mechanical-dynamic loads or deformations or movements in or on the gasket (1, 11, 19) and of transforming them into corresponding electric signals that can be picked up and further processed at the sensor (3, 3', 16, 16', 20, 20') for purposes of evaluation whereby, on the basis of the evaluated signal of the sensor (3, 3', 16, 16', 20, 20'), a conclusion can be drawn about the proper functioning of the gasket (1, 11, 19) as well as about the tightness of said gasket.

6. Device to monitor the proper functioning of a flat gasket (6) with at least one sensor (7, 7'), characterized in that
the sensor (7, 7') is arranged immediately on the flat gasket (6) or in the flat gasket (6), whereby said sensor is capable of directly detecting mechanical-dynamic loads or deformations or movements in or on the flat gasket (6) and of transforming them into corresponding electric signals that can be picked up and further processed at the sensor (7, 7') for purposes of evaluation whereby, on the basis of the evaluated signal of the sensor (7, 7'), a conclusion can be drawn about the proper functioning of the flat gasket (6) as well as about the tightness of said gasket.

7. Device according to Claim 5 or 6, characterized in that
a moving, preferably rotating pulse generator (21) located outside of the gasket (19) is adjacent to the sensors (20, 20') arranged on the gasket (2, 19) or in the gasket (1, 11, 19) and the sensors (20, 20') are capable of directly detecting the movements, preferably rotations, of the pulse generator (21) and of transforming them into electric signals, whereby these signals can be picked up at the sensors (20, 20') in order to regulate or control technical systems so that the gasket (19) is capable of functioning as an autonomous measurement and control device.

8. Device according to Claim 7, characterized in that
the pulse generator is a bearing (21), especially a ball bearing (21), and the movement is a continuous rotating movement and the moving parts (23) of the bearing (21), especially balls (23) or a cage, move in the area of the gasket whereby, in or on the gasket (19), the sensor (20, 20') is capable of generating corresponding electrical signals that, for purposes of evaluation, can be picked up and evaluated at the sensor (20, 20') or at the pulse generator (21).

9. Device according to Claim 8, characterized in that
the pulse generator is a ball bearing (21) into which the gasket (19) is integrated.

10. Device according to Claim 8, characterized in that
the sensors (3, 3', 7, 7', 16, 16', 20, 20') are arranged in a toroidal gasket (19) on a circle around the center hole and the pulse generator (21) is located on the shaft (5) outside ofthe gasket (19), opposite and immediately adjacent to said gasket.

11. Device according to Claim 5 or 6 or 7, characterized in that
the sensors (3, 3', 7, 7', 16, 16', 20, 20') are electromagnetic transducers such as piezo systems or magnetic systems or Hall generators or mechanical sensors such as electric contact conductors or permanent magnets which are appropriately arranged in the gasket, depending on their mode of operation.

12. Device according to Claim 7 or 8, for measuring accelerations and decelerations of bearing parts or bearings, or accelerations and decelerations of a moving shaft on which the bearing is arranged, characterized in that,
on the basis of the frequency of the generated electrical signals, it is possible to regulate or control technical systems that work with such signals, such as antiblocking systems.

## Revendications

1. Procédé pour la surveillance du bon état de fonctionnement d'un joint (1,11, 19) aménagé autour d'un arbre, y compris de l'étanchéité dudit joint sur un arbre (5) ou un axe, caractérisé en ce que,
en contiguïté immédiate au joint (1,11,19) ou à l'intérieur du joint (1,11,19), est disposé au moins un capteur (3,3',11,16',20,20') qui enregistre directement des tensions de forces de mécanique dynamique, ou des déformations, ou des mouvements qui se produisent à l'intérieur ou sur le joint (1,11,19) et les transforme en des signaux électriques correspondants qui sont recueillis sur le capteur (3,3',16,16',20,20'), puis traités et évalués, le signal évalué qui provient du capteur (3,3',16,16',20,20') permettant de conclure du bon état de fonctionnement du joint (1,11,19), y compris de son étanchéité.

2. Procédé pour la surveillance du bon état de fonctionnement d'un joint plat (6), ayant recours à au moins un capteur (7,7'), caractérisé en ce que
le capteur (7,7') est agencé sur le joint plat (6), ou logé à l'intérieur du joint plat (6) et enregistre directement des tensions de forces de mécanique dynamique ou des déformations, ou des mouvements qui se produisent à l'intérieur ou sur le joint plat (6), et les transforme en signaux électriques qui afin d'être évalués, sont recueillis sur le capteur (7,7') puis traités, le signal provenant du capteur (7,7') permettant, une fois évalué, de conclure du bon état de fonctionnement du joint plat (6), y compris de son étanchéité.

3. Procédé selon l'une des revendications 1 ou 2, caractérisé en ce que
un générateur d'impulsions (21) en mouvement, de préférence en rotation, est aménagé en dehors du joint (19), en contiguïté immédiate aux capteurs (20, 20') disposés sur le joint (19) ou logés à l'intérieur du joint (19), et que les capteurs (20,20') enregistrent les mouvements, de préférence les rotations du générateur d'impulsions (21) directement sur le joint ou à l'intérieur du joint et les transforment en signaux électriques, ces signaux étant recueillis sur les capteurs (20,20') pour le réglage et la commande de systèmes techniques, ce qui fait que le joint (19) fait ainsi office d'appareil de mesure et de commande fonctionnant en autonome.

4. Procédé selon l'une des revendications 1, 2 ou 3 , caractérisé en ce que
le générateur d'impulsions employé est un palier (21), notamment un roulement à billes (21) et que les pièces en mouvement (23) du palier à roulement (21) notamment des billes (23) ou une cage structurée sont en mouvement en contiguïté immédiate au joint (19), et que, ce faisant, des signaux électriques correspondants sont générés par le capteur (20,20') logé à l'intérieur du joint (19) ou aménagé sur le joint (19), signaux électriques recueillis sur le capteur (20, 20') ou sur le générateur d'impulsions (21), afin d'être évalués.

5. Dispositif pour la surveillance du bon état de fonctionnement d'un joint (1,11, 19) aménagé autour d'un arbre, y compris de l'étanchéité dudit joint sur un arbre (5) ou un axe, caractérisé en ce que,
en contiguïté immédiate au joint (1,11,19) ou à l'intérieur du joint (1,11,19), est disposé au moins un capteur (3,3',16,16',20,20') qui est à même d'enregistrer directement des tensions de force de mécanique dynamique, ou des déformations, ou des mouvements qui se produisent à l'intérieur ou sur le joint (1,11, 19), et de les transformer en des signaux électriques correspondants qui peuvent être recueillis sur le capteur (3,3',16,16',20,20') puis traités et évalués, le signal évalué qui provient du capteur (3,3',16,16',20,20') permettant de conclure du bon état de fonctionnement du joint (1,11,19), y compris de son étanchéité.

6. Dispositif pour la surveillance du bon état de fonctionnement d'un joint plat (6) avec au moins un capteur (7,7'), caractérisé en ce que
le capteur (7,7') est agencé en contiguïté immédiate au joint plat (6) ou à l'intérieur du joint plat (6) et est à même d'enregistrer directement des tensions de forces de mécanique dynamique ou des déformations ou des mouvements qui se produisent à l'intérieur ou sur le joint plat (6), et de les transformer en des signaux électriques correspondants qui peuvent être recueillis sur le capteur (7,7') puis traités afin d'être évalués, le signal évalué qui provient du capteur (7,7') permettant de conclure du bon état de fonctionnement du joint plat (6), y compris de son étanchéité.

7. Dispositif selon l'une des revendications 5 ou 6, caractérisé en ce que
un générateur d'impulsions (21) en mouvement, de préférence en rotation, est disposé en dehors du joint (19) en contiguïté immédiate aux capteurs (20,20') agencés sur le joint (2,19) ou à l'intérieur du joint (1,11,19), et que les capteurs (20,20') sont en mesure d'enregistrer directement les mouvements, de préférence les rotations du générateur d'implusions (21), et de les transformer en signaux électriques, ces signaux étant recueillis sur les capteurs (20,20') pour le réglage et la commande de systèmes techniques, le joint (19) étant ainsi à même de fonctionner en tant qu'appareil de commande et de mesure autonome.

8. Dispositif selon la revendication 7, caractérisé en ce que
le générateur d'impulsions est un palier (21), notamment un roulement à billes (21) et que le mouvement est un mouvement de rotation continu et que les pièces en mouvement (23) du palier (21), notamment des billes (23) où une cage, sont en mouvement en contiguïté immédiate au joint, le capteur (20,20') disposé à l'intérieur ou sur le joint (19) étant en mesure de générer des signaux électriques qui peuvent être recueillis sur le capteur (20,20') ou sur le générateur d'impulsions (21) et peuvent être évalués.

9. Dispositif selon la revendication 8, caractérisé en ce que
le générateur d'impulsions (21) est un roulement à billes auquel est intégré le joint (19).

10. Dispositif selon la revendication 8, caractérisé en ce que
les capteurs (3,3',7,7',16,16',20,20') sont aménagés dans un joint torique (19) sur un cercle formant une révolution autour du trou central et que le générateur d'impulsions (21) sur l'arbre (5) est aménagé en dehors du joint (19) juste en regard de ce dernier.

11. Dispositif selon l'une des revendications 5, 6 ou 7, caractérisé en ce que
les capteurs (3,3',7,7',16,16',20,20') sont des transducteurs électromécaniques tels que des systèmes piézo ou des systèmes magnétiques ou des générateurs Hall, ou bien des détecteurs à fonctionnement mécanique tels que des conducteurs à contacts électriques ou des aimants permanents qui sont logés à l'intérieur du joint suivant leur mode de fonctionnement.

12. Dispositif selon la revendication 7 ou 8, destiné à mesurer l'accélération ou le ralentissement de pièces de paliers ou de paliers, ou bien l'accélération ou le ralentissement d'un arbre en mouvement sur lequel est aménagé le palier, caractérisé en ce que,
partant de la fréquence des signaux électriques générés, il est possible de régler ou de piloter des systèmes techniques fonctionant au moyen de tels signaux électriques, tels que des systèmes d'antiblocage.
